# EUROPEAN PATENT SPECIFICATION

(11) **EP 2 302 935 B1**
(45) Date of publication and mention of the grant of the patent: **11.01.2017**
(21) Application number: 08873409.0
(22) Date of filing: 25.11.2008
(51) Int. Cl.: H04N 21/43, H04N 21/434, H04N 21/442

(54) **METHOD AND DEVICE FOR CLOCK RECOVERY**
VERFAHREN UND EINRICHTUNG ZUR TAKTWIEDERGEWINNUNG
PROCÉDÉ ET DISPOSITIF DE RÉCUPÉRATION D'HORLOGE

(30) Priority: 21.03.2008 CN 200810084420
(43) Date of publication of application: 30.03.2011
(73) Proprietor: Huawei Technologies Co., Ltd., Longgang District Shenzhen, Guangdong 518129 (CN)
(72) Inventor: REN, Xincun, Shenzhen (CN)
(74) Representative: Isarpatent
(86) International application number: PCT/CN2008/073195
(87) International publication number: WO 2009/114978

(56) References cited:
- EP-A2- 0 778 710
- EP-A2- 1 294 116
- CN-A- 1 476 726
- CN-A- 1 507 746
- CN-A- 101 247 527
- JP-A- 2004 023 136
- JP-A- 2004 032 069
- US-A1- 2006 105 703

## Description

### Field of the Invention

The present invention relates to digital technologies, and in particular, to a method and device for clock recovery.

### Background

Clock recovery is one of key techniques for digital media play control. Its purpose is to control the play speed of local bit stream and the bit stream transmission speed of the source end by means of synchronizing clocks of the bit stream transmitting end and local end so that the play speed of local bit stream is permanently consistent with the bit stream transmission speed of the source end, thus preventing the overflow or underflow of the local player.

In the prior arts in connection with the present invention, the general solution is to recover the media stream clock through a hardware phase-locked loop. The Program Clock Reference (PCR) extracted from a Transport Stream (TS) is compared with the local System Time Clock (STC) to obtain a difference e and the difference e is input to a low-pass filter to get a value f after filtering. The value f is generally a signal that controls the working frequency of a Voltage-Controlled Oscillator (VCO). The adjusted clock output by the VCO is input to an STC generator to generate recovered local clock. The Presentation Time Stamp (PTS) of video and that of audio are respectively compared with the STC, then synchronization process is performed to ensure "lip sync"(abbreviation of "lip synchronization", means that video and audio is synchronized). The 27 MHz clock generated by the VCO may be used as a clock source of the video outputting module. Because the STC is a clock that has been continuously compared and adjusted by the phase-locked loop and PCR, only a phase difference caused by network delay exists

between the STC and the clock of the source end, but the frequency of the STC is consistent with the clock of the source end. Thus, consistency is assured between the play speed and transmission speed of the source end bit stream and therefore overflow will not happen to the local buffer.

However, it has become apparent that the prior art has the following defects:
A phase-locked loop circuit and external VCO support are necessary so that the cost is high.

In the case of an Internet Protocol (IP) network with large jitters, because the arrival time of the PRC is not accurate, the recovery effect of the VCO is unsatisfactory.

Document D1 (EP 0778710 A2) discloses a method and a system for the matching of the receiver system clock with the transmitter system clock in an asynchronous data transmission system from a transmitter to a receiver, the matching including frequency as well as counter value. According to the invention the size of a buffer can be minimized by comparing the received references (PCR2,3...) with the receiver system clock (STC) after which the difference is derivated (6) and compared with preceding defferences, whereupon the rate of change so detected controls the frequency of the receiver system clock.

Document D2 (US 2006/0105703 A1) discloses a broadcast station synchronization method in a mobile terminal operating with a system clock different from the reference clock of a broadcast station, wherein a clock synchronized with the broadcast station is reproduced according to an internal reference clock corrected by the reference time information from the broadcast station, a difference between an elapsed time at a predetermined time interval and the audio reproduction time is detected, the audio reproduction time is adjusted to cancel the difference, and the PCM transmission for reproducing the audio uses a signal indicating the PCM data transmission completion as a trigger for latching the internal reference clock count unit reproducing the clock synchronized with the broadcast station so as to acquire the clock time synchronized with the broadcast station of the same period as the audio reproduction time per a predetermined period, thereby performing synchronization with the broadcast station.

Document D3 (JP2004-023136) discloses a reference clock generating section 106 uses a clock from a system clock generating section 105 to generate a reference clock to count the number of audio samples on the basis of time stamp information or synchronization control information obtained by a demodulation section 101. A sample rate control section 108 controls a sample rate of a sample rate conversion section 104 to obtain a desired number of audio samples and applies output control to data of an audio decode section 103.

### Summary

The present invention provides a method and device to enable effective clock recovery in the case of long network delay without a Digital Controlled Oscillator (SCO) or Voltage Controlled Oscillator (VCO).

The present invention is defined by claims 1-9.

Compared with the prior art, the technical solution of the present invention provides the following benefits:
The technical solution of the present invention adopts software filtering and tracks the first PCR signal to realize cyclic monitoring and recover the first PCR signal without a DCO/VCO so that clock recovery is more adaptive to network conditions.

### Brief Description of the Drawings

FIG. 1 shows a procedure of a method for clock recovery in a first embodiment of the present invention;
FIG. 2 is a schematic drawing of a method for clock recovery in a second embodiment of the present invention;
FIG. 3 shows a structure of a device for clock recovery in the first embodiment of the present invention; and
FIG. 4 shows a structure of a device for clock recovery in the second embodiment of the present invention.

### Detailed Description of Embodiments

The embodiments of the present invention provide a method and device for clock recovery.

The following describes the present invention in detail with drawings and embodiments.

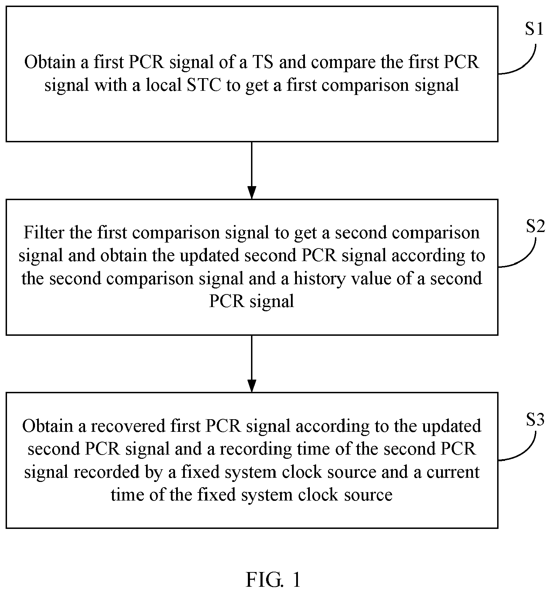

The first embodiment of the present invention provides a method for clock recovery, as shown in FIG. 1. The method includes the following blocks:
Block S1: Obtain a first Program Clock Reference (PCR) signal of a Transport Stream (TS) and compare the first PCR signal with a local System Time Clock (STC) signal to get a first comparison signal.
   Before the block S1, it is necessary to set filtering parameters and the times of filtering according to the bearer network condition and user requirement and introduce a fixed system clock source to activate the local system clock module.
Block S2: Filter the first comparison signal to get a second comparison signal and obtain an updated second PCR signal according to the second comparison signal and a history value of a second PCR signal. The filtering algorithm used to filter the first comparison signal includes the Exponentially Weighted Moving Average (EWMA) filtering algorithm and the filtering algorithm is substitutable and configurable.
   The first comparison signal is filtered to remove delay and jitter and obtain the updated second PCR signal. In this block, the history value refers to the continuously updated second PCR signal. The initial value of the history value is the initial value of the first PCR when the system initializes.
Block S3: Obtain a recovered first PCR signal according to the updated second PCR signal and a recording time of the second PCR signal recorded by a fixed system clock source and a current time of the fixed system clock source.

The block of obtaining the recovered first PCR signal also includes updating the local STC to the recovered first PCR signal to track the first PCR signal. Because the process of obtaining and outputting of the second local STC is not continuous, the recovered first PCR (updated STC) needs to provide a continuous local STC to the player, a fixed clock source of the system is introduced during the course of generating the local STC to record the recording time of the second PCR signal and the current time of the system.

In this block, the calculation of the recovered first PCR signal according to the second PCR signal, the recording time and the current time is: recovered first PCR signal = second PCR signal + current time - recording time.

### Embodiment 2: method for clock recovery

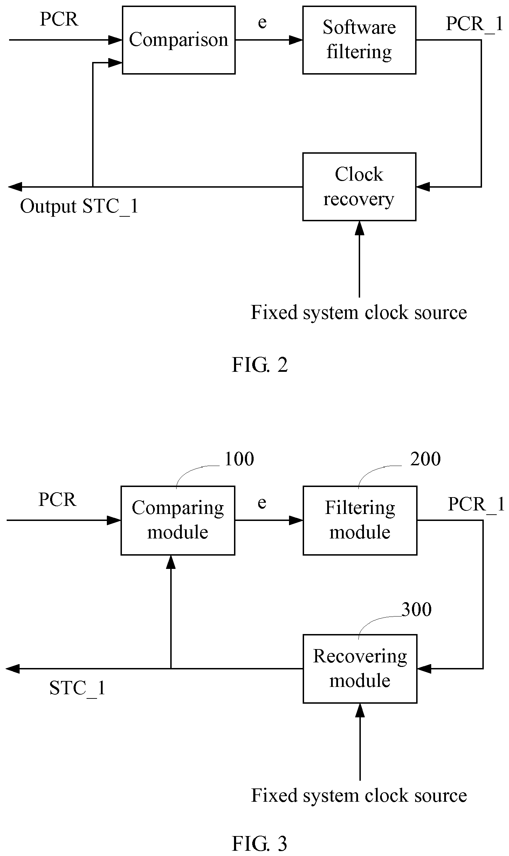

As shown in FIG. 2, in the embodiment, the first PCR signal is recovered by means of filtering and the updated local System Time Clock STC_1 (the first PCR signal which is recovered) is used as the local system clock for video/audio synchronization of a player; according to the parameters like Presentation Time Stamp (PTS), the play speed of video/audio stream is controlled to synchronize the play speed of the local stream with the transmission speed of the source end, and the lip sync is implemented. The video outputting module of the player may introduce a constant 27 MHz clock source instead of STC_1.

The specific procedure for clock recovery is described hereafter. As shown in FIG. 2, a PCR data extracted from a TS (corresponding to the first PCR signal in the first embodiment) is compared with (or subtracted from) STC₋1 (corresponding to the local STC signal in the first embodiment) to get a comparison signal e. The signal e is filtered to eliminate error of the PCR caused by delay and jitter. The filtered comparison signal is added to a history value to get PCR_1 (corresponding to the second PCR signal in the first embodiment), the history value herein is the value of PCR_1 before being updated. When the player needs to use the local STC, clock recovery is performed according to PCR_1 to get STC_1, which is the local system clock after the PCR is recovered.

The clock recovery according to PCR_1 to get STC_1 includes: recording the time of PCR_1 (time0) when PCR_1 is obtained after the filtering, where the time is based on a fixed time source of the system. Here, the time corresponds to the recording time (based on the time of the fixed system time source) of the second PCR signal in the first embodiment; when it is needed to generate a local STC (as to perform clock recovery), the current time (time1) is recorded (based on the time of the fixed system time source); the difference between time1 and time0 plus the last updated PCR_1 is the STC_1, this means: STC_1 = PCR_1 + time1 - time0. STC_1 corresponds to the recovered first PCR in the first embodiment and is also used as a new local STC.

During the play of the TS, the STC_1 may be used as a local clock source for video/audio synchronization of the player. The advantage is: even in the case of large jitter, because PCR_1 is obtained by filtering the PCR and the calculating of time difference during the course of generating the local STC is based on a fixed clock source, if the play of the video/audio is based on the STC_1 calculated according to the PCR_1 and the time difference, the play speed will be synchronized with the stream transmission speed so as to guarantee that the buffer of the player will not overflow or underflow; because the PTS of the audio and the PTS of video are respectively compared with STC_1 when the audio and the video are played, the play time of the audio is close to that of the video, and thus the lip sync is implemented automatically.

In the embodiment, the filtering algorithm used for software filtering is substitutable and configurable. There are many optional filtering algorithms, such as EWMA.

To facilitate calculation, the filtering parameter is usually 0.5, which facilitates the shift operation.

The calculation times of EWMA may be adjusted as required. If the bit stream speed of the source end is even, the filtering can be done even by only one EWMA operation. The process of filtering is a process of removing jitter. In the case of an IP network stream, triple EWMA operation may be used.

An embodiment of the present invention provides a device for clock recovery. As shown in FIG. 3, the device includes a comparing module 100, a filtering module 200, and a recovering module 300.

The comparing module 100 is configured to: obtain the first PCR signal of a TS and compare the first PCR signal with the local STC signal to get a first comparison signal and send the first comparison signal to the filtering module 200.

The filtering module 200 is configured to: filter the first comparison signal to get a second comparison signal and obtain an updated second PCR signal according to the second comparison signal and a history value of a second PCR signal, and send the updated second PCR signal to the recovering module 300.

The recovering module 300 is configured to obtain a recovered first PCR signal according to the updated second PCR signal and a recording time of the second PCR signal recorded by a fixed system clock source and a current time of the fixed system clock source.

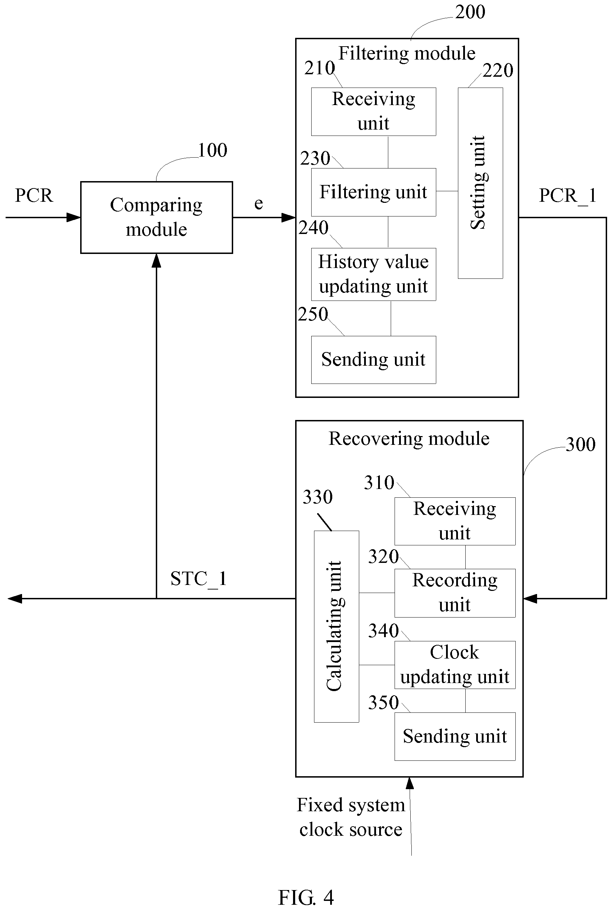

FIG. 4 shows the structure of a device for clock recovery in the second embodiment of the present invention. The modules are further divided on the basis of the first embodiment. The recovering module 300 includes: a receiving unit 310, a recording unit 320, a calculating unit 330, a clock updating unit 340, and a sending unit 350.

The receiving unit 310 is configured to receive the updated second PCR signal and connect the fixed system clock source.

The recording unit 320 is configured to record the updated second PCR signal received by the receiving unit 310, the recording time of the second PCR signal recorded by the fixed system clock source, and the current time of the fixed system clock source.

The calculating unit 330 is configured to obtain the recovered first PCR signal according to the updated second PCR signal of the recording unit 320, the recording time and the current time of the recording unit 320.

The clock updating unit 340 is configured to update the local STC to the recovered first PCR signal according to the recovered first PCR signal obtained by the calculating unit 330.

The sending unit 350 is configured to send the recovered first PCR obtained by the calculating unit 330 and the local STC updated by the clock updating unit 340 to the comparing module to track the source end bit stream play speed of the first PCR signal.

The filtering module 200 includes a receiving unit 210, a setting unit 220, a filtering unit 230, a history value updating unit 240 and a sending unit 250.

The receiving unit 210 is configured to receive the first comparison signal.

The setting unit 220 is configured to set the filtering parameter and the times of filtering according to the bearer network condition and user requirement.

The filtering unit 230 is configured to run the filtering software according to the filtering parameter and the times of filtering set by the setting unit 220 to filter the first comparison signal received by the receiving unit 210 to remove delay and jitter and obtain the second comparison signal.

The history value updating unit 240 is configured to obtain an updated history value according to the second comparison signal and the history value of the second PCR signal and the updated history value is the updated second PCR signal. Because STC₋1 has only the fixed system clock source during initialization, and the fixed system clock source is normally several megahertz that can be ignored compared with the PCR, the initial history value is the initial value of the first PCR signal through the comparing module 100.

The sending unit 250 is configured to send the updated second PCR signal obtained by the history value updating unit 240 to the recovering module 300.

In the filtering module 200, the filtering algorithm in the filtering unit 230 is substitutable and configurable and the filtering algorithm includes the EWMA algorithm.

An application example of the clock recovery device provided by the embodiment of the present invention will be described. In the embodiment, unlike the clock recovery implemented via a phase-locked loop circuit, a constant 27 MHz clock which has no relationship with the clock recovery device can be introduced in the video outputting module of the player and the clock will not be impacted by PCR jitters so as to avoid the transmission jitter and delay of the clock signal in an IP network; moreover, in the embodiment of the present invention, the support of devices like a VCO is not needed so that the design and manufacture cost is lower. In addition, the first PCR is recovered through filtering and the local STC is updated to the recovered first PCR signal to track the first PCR signal; the updated STC₋1 is used as the local system clock for audio/video synchronization of the player and the play speed of an audio/video is controlled through parameters (e.g. PTS) to synchronize the play speed of local bit stream with the transmission speed of the source and the process of lip sync is performed.

As shown in FIG. 4, before a player system runs, the clock recovery device is initialized to obtain the history value of the filtering module 200; the filtering parameter and the times of filtering are set according to the bearer network condition and user requirement; and a fixed system clock source is introduced to activate the recovering module 300. During the play of a bit stream, the PCR data extracted from the TS (corresponding to the first PCR signal in the first embodiment) is sent to the comparing module 100; the comparing module compares the PCR with the STC₋1 extracted from the recovery device (corresponding to the local STC signal in the first embodiment) to get e; then e is filtered by the filtering module 200 to eliminate error of the PCR caused by delay and jitter; the filtered comparison signal is added to the history value to get PCR_1 (corresponding to the second PCR signal in the first embodiment); the PCR_1 is input to the recovering module 300; the recovering module 300 updates the PCR_1 recorded in the recording unit 320 to the latest value and records the time0 of the latest PCR_1 obtained by the recording unit 320.

When it is required to obtain STC_1 from the recovering module, the calculating unit 330 first obtains the current time (time1) of the recovering module 300 and the time0 of the recording unit 320; the difference between time1 and time0 is added to the latest PCR_1 recorded by the recovering module 300 to get STC_1 (corresponding to the recovered first PCR signal in the first embodiment and used as the new local STC). This means STC_1 = PCR_1 + time1 - time0, where time1 and time0 are both measured according to the fixed system clock source.

In the embodiment, the filtering algorithm used by the filtering module is substitutable and configurable. There are many optional filtering algorithms, such as EWMA.

To facilitate calculation, the filtering parameter is usually 0.5, which facilitates the shift operation.

The calculation times of EWMA may be adjusted as required. If the bit stream speed of the source end is even, the filtering can be done even by only one EWMA operation. The process of filtering is a process of removing jitter. In the case of an IP network stream, triple EWMA operation may be used.

During the synchronized playing of the video and the audio, the error between PTS and STC_1 may be only a few milliseconds and the STC_1 generated by the filtering module well satisfies the requirement.

In the embodiment, the filtering module filters the signal e obtained by comparing PCR and STC_1 to eliminate error of the PCR caused by delay and jitter. The filtered comparison signal is added to the history value of PCR_1 to get a new PCR_1 and the history value of the PCR_1 is updated to the new PCR_1. The new PCR_1 is input to the recovering module 300.

The video outputting module in the player uses the fixed clock source independent of the clock recovery device and the constant 27 MHz clock is introduced as the clock input of the video outputting module. The clock for video/audio synchronization of the TS player is the local STC which is continuously updated by tracking the PCR of the TS. Even if inconsistency happens between the play speed and transmission speed of the source end stream for certain reasons, the player can make analysis and processing according to the video/audio synchronization clock and the clock of the video outputting module, for example, through frame skipping, so that the TS player is more adaptive to the network environment.

The technical solution provided by the embodiments of the present invention provides the following benefits: in the prior art, the PCR is used as the local clock source for synchronization of the video outputting module of the player and the audio/video synchronization of the player and therefore jitter is inevitable; in the embodiments of the present invention, a fixed system clock source is introduced independently of the Digital-Controlled Oscillator (DCO) or VCO and an unadjusted fixed clock source is used to drive the video outputting module; the video/audio synchronization of the player is independent of the clock of the video outputting module; the recovered STC_1 is compared with the PCR to track the changes of the PCR and implement clock recovery through filtering. The process is cyclic so that the STC required by video/audio synchronization of the local player is generated. This means, in the embodiments of the present invention, the first PCR signal is tracked to implement cyclic monitoring. The first PCR signal is thus recovered and the clock recovery is more adaptive to the network condition. The clock recovering module is implemented by software without the VCO/TCO in the prior art, and jitter is eliminated through filtering, the local STC is updated, the changing first PCR signal is tracked to satisfy the requirement of the video/audio synchronization, and the buffer of the player will not overflow and the cost is saved. Even in the case of large network delay, the normal work of the video outputting module will not be impacted. In the video/audio synchronization of the player, the clock recovery device analyzes the PCR and tracks the clock change of the play speed of the source end stream and carries out appropriate processing. Thus, the clock recovery solution is more adaptive to network jitter.

Based on the descriptions of the preceding embodiments, those skilled in the art may understand that the present invention may be implemented by only hardware or by software and a necessary universal hardware platform. The technical solution of the present invention may be embodied by a software product which may be stored in a nonvolatile storage medium. The storage medium can be a Compact Disk Read-Only Memory (CD-ROM), a USB disk, or a mobile hard disk. The software product includes a number of instructions that enable a computer device (personal computer, server, or network device), to execute the methods provided in the embodiments of the present invention.

Although the present invention has been described through several exemplary embodiments, the invention is not limited to such embodiments.

## Claims

1. A method for clock recovery, comprising:
obtaining (S1) a first Program Clock Reference (PCR), PCR, signal of a Transport Stream, TS, and comparing the first PCR signal (PCR) with a local System Time Clock (STC_1), STC , signal to get a first comparison signal (e);
wherein the method further comprises:
before receiving the first PCR (PCR) of the TS setting filtering parameters and the times of filtering according to the bearer network conditions and a user requirement;
filtering (S2) the first comparison signal (e) to remove delay and jitter and to get a second comparison signal and obtaining an updated second PCR signal (PCR_1) according to the second comparison signal and a history value of the second PCR signal (PCR_1), the history value of the second PCR signal (PCR_1) refers to a continuously updated second PCR signal (PCR_1), an initial value of the history value of the second PCR signal (PCR_1) is an initial value of the first PCR signal (PCR) when a system initializes; and
obtaining (S3) a recovered first PCR signal (STC_1) according to the updated second PCR signal (PCR_1) and a recording time of the second PCR signal (PCR_1) and a current time of a fixed system clock source, wherein the recording time of the second PCR signal (PCR_1) is recorded when the second PCR signal (PCR_1) is obtained after the filtering, where the time is based on a fixed time source of the system; wherein obtaining (S3) the recovered first PCR signal (STC_1) comprises:
the recovered first PCR signal (STC_1) being equal to the updated second PCR signal (PCR_1) plus the current time minus the recording time.

2. The method of claim 1, further comprising:
updating the local STC to the recovered first PCR signal (STC_1) to track the first PCR signal (PCR).

3. The method of claim 1, before receiving the first PCR (PCR) of the TS, further comprising:
introducing the fixed system clock source to record the recording time and the current time.

4. The method of claim 1, **characterized in that** the block of obtaining the updated second PCR signal (PCR_1) according to the second comparison signal and a history value of the second PCR signal (PCR_1) comprises:
updating the history value to the updated second PCR signal (PCR_1), **characterized in that** the initial history value is the initial value of the first PCR signal (PCR).

5. The method of claim 1, **characterized in that** filtering algorithms adopted to filter the first comparison signal (e) comprise an Exponentially Weighted Moving Average EWMA filtering algorithm.

6. A device for clock recovery, comprising a comparing module (100), a filtering module (200) and a recovering module (300), wherein :
the comparing module (100) is configured to: obtain a first Program Clock Reference (PCR), PCR, signal of a Transport Stream, TS, and compare the first PCR signal (PCR) with a local System Time Clock (STC_1), STC, Signal to get a first comparison signal (e) and send the first comparison signal (e) to the filtering module;
the filtering module (200) is configured to: filter the first comparison signal (e) to remove delay and jitter and to get a second comparison signal and obtain an updated second PCR signal (PCR_1) according to the second comparison signal and a history value of the second PCR signal (PCR_1), and send the updated second PCR signal (PCR_1) to the recovering module, the history value of the second PCR signal (PCR_1) refers to a continuously updated second PCR signal (PCR_1), an initial value of the history value of the second PCR signal (PCR_1) is an initial value of the first PCR signal (PCR) when a system initializes; and
the recovering module (300) is configured to: obtain a recovered first PCR signal (STC_1) according to the updated second PCR signal (PCR_1) and a recording time of the second (PCR_1) PCR signal and a current time of the fixed system clock source, wherein the recording time of the second PCR signal (PCR_1) is recorded when the second PCR signal (PCR_1) is obtained after the first comparison signal (e) is filtered, where the time is based on a fixed time source of the system; the obtaining the recovered first PCR signal (STC_1) comprises:
the recovered first PCR signal (STC_1) being equal to the updated second PCR signal (PCR_1) plus the current time minus the recording time;
wherein the filtering module (200) comprises a setting unit (220), which is configured to set a filtering parameter and the times of filtering according to bearer network conditions and a user requirement.

7. The device of claim 6, **characterized in that** the recovery module (300) comprises: a receiving unit (310), a recording unit (320), a calculating unit (330), a clock updating unit (340) and a sending unit (350);
the receiving unit (310) is configured to receive the updated second PCR signal (PCR_1) and connect the fixed system clock source;
the recording unit (320) is configured to record the updated second PCR signal (PCR_1) received by the receiving unit, the recording time of the second PCR signal (PCR_1) recorded by the fixed system clock source, and the current time of the fixed system clock source;
the calculating unit (330) is configured to obtain the recovered first PCR signal (STC_1) according to the updated second PCR signal (PCR_1) of the recording unit, the recording time and the current time of the recording unit;
the clock updating unit (340) is configured to update the local STC to the recovered first PCR signal (STC_1) according to the recovered first PCR signal (STC_1) obtained by the calculating unit; and
the sending unit (350) is configured to send the recovered first PCR signal (STC_1) obtained by the calculating unit and the local STC updated by the clock updating unit to the comparing module to track the source end bit stream play speed of the first PCR signal (PCR).

8. The device of claim 6, **characterized in that** the filtering module (200) comprises: a receiving unit (210), a filtering unit (230), a history value updating unit (240) and a sending unit (250);
the receiving unit (210) is configured to receive the first comparison signal (e);
the filtering unit (230) is configured to run filtering software according to the filtering parameter and the times of filtering set by the setting unit to filter the first comparison signal (e) received by the receiving unit to remove delay and jitter and obtain the second comparison signal;
the history value updating unit (240) is configured to obtain the updated history value according to the second comparison signal obtained by the filtering unit and the history value of the second PCR signal (PCR_1), **characterized in that** the updated history value is the updated second PCR signal (PCR_1); and
the sending unit (250) is configured to send the updated second PCR signal (PCR_1) obtained by the history value updating unit to the recovering module.

9. The device of claim 8, **characterized in that** filtering algorithms of the filtering unit comprise an Exponentially Weighted Moving Average, EWMA, filtering algorithm.

## Patentansprüche

1. Verfahren zur Taktrückgewinnung, das Folgendes umfasst:
Beziehen (S1) eines ersten Programmtaktreferenzsignals (PCR-Signals) (PCR) eines Transportstroms TS und Vergleichen des ersten PCR-Signals (PCR) mit einem lokalen Systemzeittaktsignal (STC-Signal) (STC_1), um ein erstes Vergleichssignal (e) zu erhalten;
wobei das Verfahren weiterhin Folgendes umfasst:
vor dem Empfangen des ersten PCR (PCR) des TS Einstellen von Filterparametern und der Filterzeiten gemäß den Trägernetzwerkbedingungen und einer Benutzeranforderung;
Filtern (S2) des ersten Vergleichssignals (e), um Verzögerung und Schwankungen zu entfernen und ein zweites Vergleichssignal zu erhalten, und Beziehen eines aktualisierten zweiten PCR-Signals (PCR_1) gemäß dem zweiten Vergleichssignal und eines Geschichtswerts des zweiten PCR-Signals (PCR_1), wobei der Geschichtswert des zweiten PCR-Signals (PCR_1) sich auf ein kontinuierlich aktualisiertes zweites PCR-Signal (PCR_1) bezieht, wobei ein Anfangswert des Geschichtswerts des zweiten PCR-Signals (PCR_1) ein Anfangswert des ersten PCR-Signals (PCR) ist, wenn ein System initialisiert wird; und
Beziehen (S3) eines rückgewonnenen ersten PCR-Signals (STC_1) gemäß dem aktualisierten zweiten PCR-Signal (PCR_1) und einer Aufzeichnungszeit des zweiten PCR-Signals (PCR_1) und einer aktuellen Zeit einer festgelegten Systemtaktquelle,
wobei die Aufzeichnungszeit des zweiten PCR-Signals (PCR_1) aufgezeichnet wird,
wenn das zweite PCR-Signal (PCR_1) nach dem Filtern bezogen wird, wobei die Zeit auf einer festgelegten Zeitquelle des Systems basiert; wobei das Beziehen (S3) des rückgewonnenen ersten PCR-Signals (STC_1) Folgendes umfasst:
das rückgewonnene erste PCR-Signal (STC_1) ist gleich dem aktualisierten zweiten PCR-Signal (PCR_1) plus der aktuellen Zeit minus der Aufzeichnungszeit.

2. Verfahren nach Anspruch 1, das weiterhin Folgendes umfasst:
Aktualisieren des lokalen STC auf das rückgewonnene erste PCR-Signal (STC_1), um das erste PCR-Signal (PCR) zu verfolgen.

3. Verfahren nach Anspruch 1, das vor dem Empfangen des ersten PCR (PCR) des TS weiterhin Folgendes umfasst:
Einbringen der festgelegten Systemtaktquelle, um die Aufzeichnungszeit und die aktuelle Zeit aufzuzeichnen.

4. Verfahren nach Anspruch 1, **dadurch gekennzeichnet, dass** der Block des Beziehens des aktualisierten zweiten PCR-Signals (PCR_1) gemäß dem zweiten Vergleichssignal und eines Geschichtswerts des zweiten PCR-Signals (PCR_1) Folgendes umfasst:
Aktualisieren des Geschichtswerts auf das aktualisierte zweite PCR-Signal (PCR_1), **dadurch gekennzeichnet, dass** der Anfangsgeschichtswert der Anfangswert des ersten PCR-Signals (PCR) ist.

5. Verfahren nach Anspruch 1, **dadurch gekennzeichnet, dass** Filteralgorithmen, die zum Filtern des ersten Vergleichssignals (e) angewendet werden, einen Filteralgorithmus eines exponentiell gewichteten gleitenden Mittelwerts (EWMA-Algorithmus) umfassen.

6. Vorrichtung zur Taktrückgewinnung, die ein Vergleichsmodul (100), ein Filtermodul (200) und ein Rückgewinnungsmodul (300) umfasst, wobei:
das Vergleichsmodul (100) zu Folgendem konfiguriert ist: Beziehen eines ersten Programmtaktreferenzsignals (PCR-Signals) (PCR) eines Transportstroms TS und Vergleichen des ersten PCR-Signals (PCR) mit einem lokalen Systemzeittaktsignal (STC-Signal) (STC_1), um ein erstes Vergleichssignal (e) zu erhalten, und Senden des ersten Vergleichssignals (e) an das Filtermodul;
das Filtermodul (200) zu Folgendem konfiguriert ist: Filtern des ersten Vergleichssignals (e), um Verzögerung und Schwankungen zu entfernen und ein zweites Vergleichssignal zu erhalten, und Beziehen eines aktualisierten zweiten PCR-Signals (PCR_1) gemäß dem zweiten Vergleichssignal und eines Geschichtswerts des zweiten PCR-Signals (PCR_1) und Senden des aktualisierten zweiten PCR-Signals (PCR_1) an das Rückgewinnungsmodul, wobei der Geschichtswert des zweiten PCR-Signals (PCR_1) sich auf ein kontinuierlich aktualisiertes zweites PCR-Signal (PCR_1) bezieht, wobei ein Anfangswert des Geschichtswerts des zweiten PCR-Signals (PCR_1) ein Anfangswert des ersten PCR-Signals (PCR) ist, wenn ein System initialisiert wird; und
das Rückgewinnungsmodul (300) zu Folgendem konfiguriert ist: Beziehen eines rückgewonnenen ersten PCR-Signals (STC_1) gemäß dem aktualisierten zweiten PCR-Signal (PCR_1) und einer Aufzeichnungszeit des zweiten (PCR_1) PCR-Signals und einer aktuellen Zeit der festgelegten Systemtaktquelle, wobei die Aufzeichnungszeit des zweiten PCR-Signals (PCR_1) aufgezeichnet wird, wenn das zweite PCR-Signal (PCR_1) bezogen wird, nachdem das erste Vergleichssignal (e) gefiltert wurde, wobei die Zeit auf einer festgelegten Zeitquelle des Systems basiert;
wobei das Beziehen des rückgewonnenen ersten PCR-Signals (STC_1) Folgendes umfasst:
das rückgewonnene erste PCR-Signal (STC_1) ist gleich dem aktualisierten zweiten PCR-Signal (PCR_1) plus der aktuellen Zeit minus der Aufzeichnungszeit;
wobei das Filtermodul (200) eine Einstellungseinheit (220) umfasst, die dazu konfiguriert ist, einen Filterparameter und die Filterzeiten gemäß Trägernetzwerkbedingungen und einer Benutzeranforderung einzustellen.

7. Vorrichtung nach Anspruch 6, **dadurch gekennzeichnet, dass** das Rückgewinnungsmodul (300) Folgendes umfasst: eine Empfangseinheit (310), eine Aufzeichnungseinheit (320), eine Berechnungseinheit (330), eine Taktaktualisierungseinheit (340) und eine Sendeeinheit (350);
wobei die Empfangseinheit (310) dazu konfiguriert ist, das aktualisierte zweite PCR-Signal (PCR_1) zu empfangen und die festgelegte Systemtaktquelle anzuschließen; wobei die Aufzeichnungseinheit (320) dazu konfiguriert ist, das aktualisierte zweite PCR-Signal (PCR_1), das von der Empfangseinheit empfangen wurde, die Aufzeichnungszeit des zweiten PCR-Signals (PCR_1), die von der festgelegten Systemtaktquelle aufgezeichnet wurde, und die aktuelle Zeit der festgelegten Systemtaktquelle aufzuzeichnen;
wobei die Berechnungseinheit (330) dazu konfiguriert ist, das rückgewonnene erste PCR-Signal (STC_1) gemäß dem aktualisierten zweiten PCR-Signal (PCR_1) der Aufzeichnungseinheit, der Aufzeichnungszeit und der aktuellen Zeit der Aufzeichnungseinheit zu beziehen;
wobei die Taktaktualisierungseinheit (340) dazu konfiguriert ist, das lokale STC auf das rückgewonnene erste PCR-Signal (STC_1) gemäß dem rückgewonnenen ersten PCR-Signal (STC_1), das von der Berechnungseinheit bezogen wurde, zu aktualisieren; und
wobei die Sendeeinheit (350) dazu konfiguriert ist, das rückgewonnene erste PCR-Signal (STC_1), das von der Berechnungseinheit bezogen wurde, und das lokale STC, das von der Taktaktualisierungseinheit aktualisiert wurde, an das Vergleichsmodul zu senden, um die Quellenende-Bitstromabspielgeschwindigkeit des ersten PCR-Signals (PCR) zu verfolgen.

8. Vorrichtung nach Anspruch 6, **dadurch gekennzeichnet, dass** das Filtermodul (200) Folgendes umfasst: eine Empfangseinheit (210), eine Filtereinheit (230), eine Geschichtswertaktualisierungseinheit (240) und eine Sendeeinheit (250);
wobei die Empfangseinheit (210) dazu konfiguriert ist, das erste Vergleichssignal (e) zu empfangen;
wobei die Filtereinheit (230) dazu konfiguriert ist, Filtersoftware gemäß dem Filterparameter und den Filterzeiten, die von der Einstellungseinheit eingestellt wurden, auszuführen, um das erste Vergleichssignal (e), das von der Empfangseinheit empfangen wurde, zu filtern, um Verzögerung und Schwankungen zu entfernen und das zweite Vergleichssignal zu beziehen;
wobei die Geschichtswertaktualisierungseinheit (240) dazu konfiguriert ist, den aktualisierten Geschichtswert gemäß dem zweiten Vergleichssignal, das von der Filtereinheit bezogen wurde, und dem Geschichtswert des zweiten PCR-Signals (PCR_1) zu beziehen, **dadurch gekennzeichnet, dass** der aktualisierte Geschichtswert das aktualisierte zweite PCR-Signal (PCR_1) ist; und
wobei die Sendeeinheit (250) dazu konfiguriert ist, das aktualisierte zweite PCR-Signal (PCR_1), das von der Geschichtswertaktualisierungseinheit bezogen wurde, an das Rückgewinnungsmodul zu senden.

9. Vorrichtung nach Anspruch 8, **dadurch gekennzeichnet, dass** Filteralgorithmen der Filtereinheit einen Filteralgorithmus eines exponentiell gewichteten gleitenden Mittelwerts (EWMA-Algorithmus) umfassen.

## Revendications

1. Procédé de récupération d'horloge, comprenant :
l'obtention (S1) d'un premier signal de référence d'horloge de programme (PCR), PCR, d'un flux de transport, TS, et la comparaison du premier signal PCR (PCR) à un signal d'horloge de temps de système (STC_1) local, STC, pour obtenir un premier signal de comparaison (e) ;
le procédé comprenant en outre:
avant la réception du premier PCR (PCR) du flux TS, le réglage de paramètres de filtrage et des temps de filtrage conformément aux conditions du réseau porteur et à un besoin d'utilisateur ;
le filtrage (S2) du premier signal de comparaison (e) pour supprimer le retard et la gigue et obtenir un second signal de comparaison et l'obtention d'un second signal PCR actualisé (PCR_1) conformément au second signal de comparaison et d'une valeur historique du second signal PCR (PCR_1), la valeur historique du second signal PCR (PCR_1) se référant à un second signal PCR actualisé continûment (PCR_1), une valeur initiale de la valeur historique du second signal PCR (PCR_1) étant une valeur initiale du premier signal PCR (PCR) à l'initialisation d'un système ; et
l'obtention (S3) d'un premier signal PCR récupéré (STC_1) conformément au second signal PCR actualisé (PCR_1) et d'un temps d'enregistrement du second signal PCR (PCR_1) et d'un temps actuel d'une source d'horloge de système fixe, dans lequel le temps d'enregistrement du second signal PCR (PCR_1) est enregistré quand le second signal PCR (PCR_1) est obtenu après le filtrage, le temps étant basé sur une source de temps fixe du système ; dans lequel l'obtention (S3) du premier signal PCR récupéré (STC_1) comprend :
le premier signal PCR récupéré (STC_1) étant égal au second signal PCR actualisé (PCR_1) plus le temps actuel moins le temps d'enregistrement.

2. Procédé selon la revendication 1, comprenant en outre :
l'actualisation du signal d'horloge STC local sur le premier signal PCR récupéré (STC_1) pour suivre le premier signal PCR (PCR).

3. Procédé selon la revendication 1, comprenant en outre, avant de recevoir le premier PCR (PCR) du flux TS :
l'introduction de la source d'horloge de système fixe pour enregistrer le temps d'enregistrement et le temps actuel.

4. Procédé selon la revendication 1, **caractérisé en ce que** le bloc d'obtention du second signal PCR actualisé (PCR_1) conformément au second signal de comparaison et d'une valeur historique du second signal PCR (PCR_1) comprend :
l'actualisation de la valeur historique sur le second signal PCR (PCR_1) actualisé, **caractérisée en ce que** la valeur historique initiale est la valeur initiale du premier signal PCR (PCR).

5. Procédé selon la revendication 1, **caractérisé en ce que** les algorithmes de filtrage adoptés pour filtrer le premier signal de comparaison (e) comprennent un algorithme de filtrage à moyenne mobile pondérée exponentiellement EWMA.

6. Dispositif de récupération d'horloge, comprenant un module de comparaison (100), un module de filtrage (200) et un module de récupération (300), dans lequel :
le module de comparaison (100) est configuré pour : obtenir un premier signal de référence d'horloge de programme (PCR), PCR, d'un flux de transport, TS, et
comparer le premier signal PCR (PCR) à un signal d'horloge de temps de système (STC_1) local, STC, pour obtenir un premier signal de comparaison (e) et envoyer le premier signal de comparaison (e) au module de filtrage ;
le module de filtrage (200) est configuré pour : filtrer le premier signal de comparaison (e) pour supprimer le retard et la gigue et obtenir un second signal de comparaison et obtenir un second signal PCR actualisé (PCR_1) conformément au second signal de comparaison et une valeur historique du second signal PCR (PCR_1), et envoyer le second signal PCR actualisé (PCR_1) au module de récupération, la valeur historique du second signal PCR (PCR_1) se référant à un second signal PCR actualisé continûment (PCR_1), une valeur initiale de la valeur historique du second signal PCR (PCR_1) étant une valeur initiale du premier signal PCR (PCR) à l'initialisation d'un système ; et
le module de récupération (300) est configuré pour : obtenir un premier signal PCR récupéré (STC_1) conformément au second signal PCR actualisé (PCR_1) et un temps d'enregistrement du second signal PCR (PCR_1) et un temps actuel de la source d'horloge de système fixe, dans lequel le temps d'enregistrement du second signal PCR (PCR_1) est enregistré quand le second signal PCR (PCR_1) est obtenu après le filtrage du premier signal de comparaison (e), le temps étant basé sur une source de temps fixe du système ; l'obtention du premier signal PCR récupéré (STC_1) comprend :
le premier signal PCR récupéré (STC_1) étant égal au second signal PCR actualisé (PCR_1) plus le temps actuel moins le temps d'enregistrement ;
dans lequel le module de filtrage (200) comprend une unité de réglage (220), qui est configurée pour régler un paramètre de filtrage et les temps de filtrage conformément aux conditions du réseau porteur et à un besoin d'utilisateur.

7. Dispositif selon la revendication 6, **caractérisé en ce que** l'unité de récupération (300) comprend : une unité de réception (310), une unité d'enregistrement (320), une unité de calcul (330), une unité d'actualisation d'horloge (340) et une unité d'envoi (350) ; l'unité de réception (310) est configurée pour recevoir le second signal PCR actualisé (PCR_1) et connecter la source d'horloge de système fixe ;
l'unité d'enregistrement (320) est configurée pour enregistrer le second signal PCR actualisé (PCR_1) reçu par l'unité de réception, le temps d'enregistrement du second signal PCR (PCR_1) enregistré par la source d'horloge de système fixe, et le temps actuel de la source d'horloge de système fixe ;
l'unité de calcul (330) est configurée pour obtenir le premier signal PCR récupéré (STC_1) conformément au second signal PCR actualisé (PCR_1) de l'unité d'enregistrement, le temps d'enregistrement et le temps actuel de l'unité d'enregistrement ;
l'unité d'actualisation d'horloge (340) est configurée pour actualiser le signal d'horloge STC local sur le premier signal PCR récupéré (STC_1) conformément au premier signal PCR récupéré (STC_1) obtenu par l'unité de calcul ; et
l'unité d'envoi (350) est configurée pour envoyer le premier signal PCR récupéré (STC_1) obtenu par l'unité de calcul et le signal d'horloge STC local actualisé par l'unité d'actualisation d'horloge au module de comparaison pour suivre la vitesse de reproduction du flux binaire de l'extrémité source du premier signal PCR (PCR).

8. Dispositif selon la revendication 6, **caractérisé en ce que** le module de filtrage (200) comprend : une unité de réception (210), une unité de filtrage (230), une unité d'actualisation de valeur historique (240) et une unité d'envoi (250) ;
l'unité de réception (210) est configurée pour recevoir le premier signal de comparaison (e) ;
l'unité de filtrage (230) est configurée pour exécuter un logiciel de filtrage conformément au paramètre de filtrage et aux temps de filtrage réglés par l'unité de réglage pour filtrer le premier signal de comparaison (e) reçu par l'unité de réception pour supprimer le retard et la gigue et obtenir le second signal de comparaison ; l'unité d'actualisation de valeur historique (240) est configurée pour obtenir la valeur historique actualisée conformément au second signal de comparaison obtenu par l'unité de filtrage et la valeur historique du second signal PCR (PCR_1), **caractérisée en ce que** la valeur historique actualisée est le second signal PCR actualisé (PCR_1) ; et
l'unité d'envoi (250) est configurée pour envoyer le second signal PCR actualisé (PCR_1) obtenu par l'unité d'actualisation de valeur historique au module de récupération.

9. Dispositif selon la revendication 8, **caractérisé en ce que** les algorithmes de filtrage de l'unité de filtrage comprennent un algorithme de filtrage à moyenne mobile pondérée exponentiellement EWMA.
